# EUROPÄISCHE PATENTSCHRIFT

(11) **EP 1 293 772 B1**
(45) Veröffentlichungstag und Bekanntmachung des Hinweises auf die Patenterteilung: **14.10.2009**
(21) Anmeldenummer: 02019420.5
(22) Anmeldetag: 30.08.2002
(51) Int. Cl.: G01N 31/10

(54) **Verfahren und Vorrichtung zur Bewertung der Merkmale von Katalysatoren**
Method and apparatus for the assessment of catalyst characteristics
Procédé et dispositif pour l'évaluation des caractéristiques du catalyseur

(30) Priorität: 31.08.2001 FR 0111348
(43) Veröffentlichungstag der Anmeldung: 19.03.2003
(73) Patentinhaber: Amtec Anwendungszentrum für Mikrotechnologien Chemnitz Gesellschaft mit beschränkter Haftung, 09125 Chemnitz (DE); CENTRE NATIONAL DE LA RECHERCHE SCIENTIFIQUE, 75016 Paris Cédex (FR)
(72) Erfinder: Mirodatos, Claude, 69003 Lyon (FR); Schuurman, Yves, 69250 Curis au Mont d'Or (FR); Hayaud, Chrystelle, 69330 Meyzieu (FR); Holzwarth, Arnold, 80469 München (DE); Farusseng, David, 69300 Caluire (FR); Richter, Thomas, 09112 Chemnitz (DE)
(74) Vertreter: Walter, Wolf-Jürgen

(56) Entgegenhaltungen:
- EP-A- 1 014 087
- WO-A-01/59463
- DE-A- 19 809 477
- FR-A- 2 763 693
- US-A- 5 340 745
- LAMBERT JR J M: "TEMPORAL ANALYSIS OF PRODUCTS OF CARBON SURFACE REACTIONS-10 YEARS LATER" CARBON, ELSEVIER SCIENCE PUBLISHING, NEW YORK, NY, US, Bd. 29, Nr. 6, 1991, Seiten 805-808, XP000307485 ISSN: 0008-6223
- FERREIRA-APARICIO P ET AL: "A Transient Kinetic Study of the Carbon Dioxide Reforming of Methane over Supported Ru Catalysts" JOURNAL OF CATALYSIS, ACADEMIC PRESS, DULUTH, MN, US, Bd. 184, Nr. 1, 15. Mai 1999 (1999-05-15), Seiten 202-212, XP004443280 ISSN: 0021-9517

## Beschreibung

Die vorliegende Erfindung betrifft ein Verfahren und eine Vorrichtung zur Bewertung der Merkmale von Katalysatoren. Gegenstand der Erfindung ist dabei eine rasche Bewertung dieser Merkmale von Katalysatoren zu deren Optimierung oder Entdeckung neuer katalytischer Materialien. Sie betrifft insbesondere die heterogene Katalyse, bei der auf einen Katalysator in fester Phase zurückgegriffen wird, während die chemische Reaktion, die durch diesen Katalysator beschleunigt wird, Reagenzien in gasförmiger und/oder flüssiger Phase einsetzt.

Es gibt eine große Zahl von industriellen chemischen Prozessen, für die die Forschung trotz erheblichen Forschungsaufwandes keinen wirklich geeigneten Katalysator gefunden hat. Dies ist dadurch zu erklären, dass die heterogenen Katalysatoren in fester Phase durch zahlreiche Parameter charakterisiert sind, die schwierig zu identifizieren und somit zu optimieren sind.

Die Entdeckung neuer Katalysatoren erfordert das Testen zahlreicher Zusammensetzungen, die sich als tatsächlich vorteilhaft im Rahmen industrieller Verfahren herausstellen können. In diesem Zusammenhang sind zwei verschiedene Methoden bereits bekannt.

Die erste Lösung besteht darin, verschiedene Katalysatoren durch kinetische Methoden im stationären Zustand zu bewerten. Zu diesem Zweck muss durch einen gegebenen Katalysator ein kontinuierlicher Fluss von Reagenzien geschickt werden und sodann müssen progressiv die verschiedenen Betriebsparameter der Reaktion (Temperatur, Teildruck und Gesamtdruck, Durchflussmenge) verändert werden.

Dieses Bewertungsverfahren weist jedoch gewisse Nachteile auf. Es ist nämlich nicht von ausreichender Effizienz, was die Informationen betrifft, die über die verschiedenen getesteten Katalysatoren erhalten werden. Ferner stellt es sich als besonders langwierig im Einsatz heraus.

Als Alternative ist bekannt, die Leistungen der Katalysatoren durch kinetische Methoden transienten Typs zu bewerten. Zu diesem Zweck geht es darum, eine punktuelle Störung in den Fluss von Reagenzien, die den getesteten Katalysator speisen, einzuleiten und am Ausgang des katalytischen Reaktors die Antwort oder Relaxation des Systems zu analysieren, d.h. seine Rückkehr in den stationären Zustand.

Diese transienten Methoden können unter Vakuum eingesetzt werden, wie im Rahmen der Zeitanalyse der Produkte "Temporal Analysis of Products" (TAP). Dieses Verfahren besteht darin, zu dem getesteten Katalysator mindestens einen Impuls eines Reagens zu leiten, dessen Dauer besonders kurz ist, beispielsweise unter 1 ms.

Im Nachlaufbereich des Katalysatorbettes wird nun insbesondere über ein Massenspektrometer eine Antwortkurve erhalten, aus der gewisse Merkmale des Katalysators abgeleitet werden können.

Diese erste transiente Methode ist beispielsweise von J.T. Gleaves, G.S. Jablonski, P. Phanawadii, Y. Schuurman Appl. Catal. A 160 (1997) 55 bekannt.

Ein weiteres gattungsgemäßes Verfahren wird von P. Ferreira-Aparicio et al. in J. Catal. 184 (1999) 202 beschrieben.

Es gibt noch andere transiente Methoden, die mit einem Druck größer oder gleich dem Luftdruck eingesetzt werden können.

So ist die Analyse des stationären Zustandes durch transiente Kinetik oder "Steady State Isotopic Transient Kinetic Analysis" (SSITKA) bekannt. Ein solches Verfahren ist beispielsweise von S.L. Shannon, J.G. Goodwin, Chem. Rev. 95 (1995) 677; S.L. Shannon, J.G. Goodwin, Appl. Catal. 151 (1997) 3 bekannt.

Dieses bekannte Verfahren besteht darin, die Leistungen eines Katalysators zu bewerten, indem er unter Bedingungen eines stationären Zustandes durch Speisung mit einem kontinuierlichen Fluss von Reaktivgasen gehalten wird. Zu einem gegebenen Testzeitpunkt geht es darum, eines der Reagenzien durch sein isotopes Äquivalent zu ersetzen (Kennzeichnung durch ein stabiles Isotop eines oder mehrerer Atome des Reagensmoleküls).

Der von diesem Reagenswechsel erzeugte Impuls ermöglicht es, auf gewisse Merkmale des getesteten Katalysators mit Hilfe der Studie einer Antwort- oder Relaxationskurve, die im Nachlaufbereich erhalten wird, zuzugreifen, insbesondere über ein Massenspektrometer, wie im Falle der oben beschriebenen Zeitanalyse der Produkte.

Als Alternative zum Verfahren SSITKA ist es auch möglich, die Zusammensetzung des durch den getesteten Katalysator fließenden Fluids stark zu verändern. In diesem Fall ist das Ersatzreagens kein Isotop des ursprünglich verwendeten Typs, sondern besitzt eine völlig unterschiedliche chemische Reaktivität.

Dies führt nun zu einer chemischen Störung des katalytischen Systems, so dass die Reaktion nicht unter Bedingungen eines stationären Zustandes erfolgt, im Gegensatz zum Verfahren SSITKA. Diese Versuche werden stufenweise transient oder "Step Transient" genannt.

Die Bewertung von Katalysatoren durch transiente-kinetische Methoden umfasst auch andere bekannte Techniken. Es geht unter anderem um die Temperatur Programmierte Desorption oder "Temperature Programmed Desorption" (TPD), um die Temperatur Programmierte Reaktion oder "Temperature Programmed Reaction" (TPRx) sowie um die Temperatur Programmierte Oxidation oder Reduktion oder "Temperature Programmed Oxidation or Reduction" (TPO und TPR).

Die oben beschriebenen transienten-kinetischen Methoden sind vorteilhaft im Vergleich zu den im stationären Zustand durchgeführten, da sie eine bessere Unterscheidung zwischen verschiedenen möglichen Reaktionsmechanismen ermöglichen.

So erscheinen sie nützlicher im Hinblick auf die Entnahme von Informationen über diese Mechanismen, wie beispielsweise die Art der elementaren Reaktionsschritte, die darin enthalten sind, sowie die entsprechenden Geschwindigkeitskonstanten.

DE 198 09 477 offenbart ein Verfahren zum stationär durchgeführten Testen von parallel angeordneten Katalysatorproben.

Die Erfindung soll ein Verfahren zur Bewertung der Merkmale eines Katalysators vorschlagen, das auf transiente-kinetische Methoden zurückgreift, deren Leistungen in Bezug auf den Stand der Technik verbessert sind, insbesondere was die Zahl von erhaltenen Informationen über die getesteten Katalysatoren betrifft.

Zu diesem Zweck betrifft sie ein Verfahren zur Bewertung der Merkmale von Katalysatoren, bei dem parallel verschiedene Katalysatorproben zur Verfügung stehen, und diese verschiedenen Proben werden nacheinander nach transienten-kinetischen Methoden getestet, gemäß den Merkmalen der Ansprüche 1 und 11.

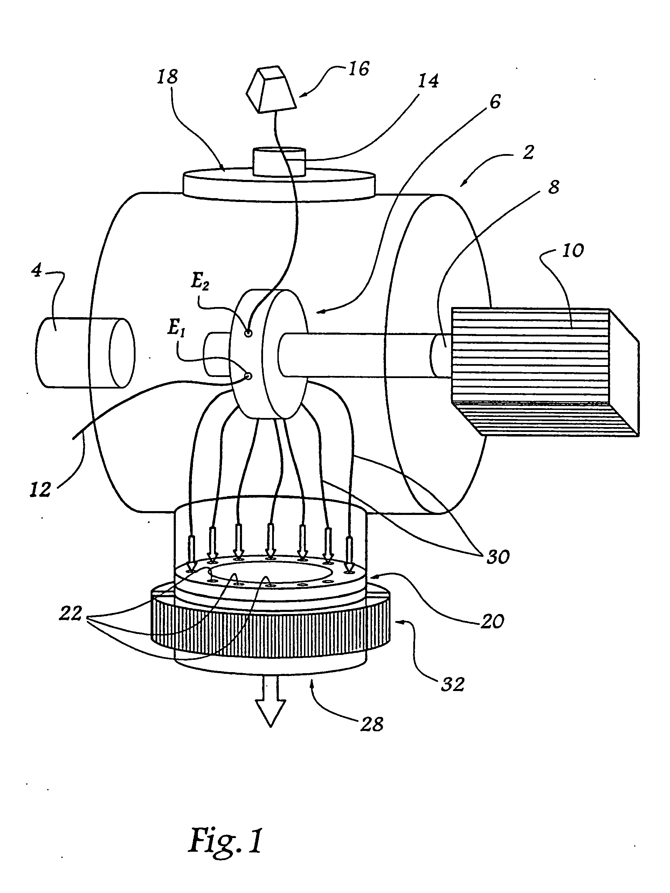

Die Erfindung ist nachstehend unter Bezugnahme auf die beiliegenden Zeichnungen beschrieben, die nur als nicht einschränkende Ausführungsbeispiele dienen, wobei:
- Figur 1 eine perspektivische Ansicht ist, die eine Vorrichtung darstellt, die den Einsatz einer ersten Ausführungsvariante des Verfahrens zur Bewertung der Leistungen von Katalysatoren gemäß der Erfindung darstellt;
- Figur 2 eine schematische Ansicht ist, die ein Ventil darstellt, mit dem die Vorrichtung der Figur 1 versehen ist;
- Figur 3 eine Längsschnittansicht der in Figur 1 dargestellten Vorrichtung ist;
- Figur 4 eine Reihe von Kurven darstellt, die ein praktisches Einsatzbeispiel des erfindungsgemäßen Verfahrens mit Hilfe der in den Figuren 1 bis 3 dargestellten Vorrichtung zeigen;
- Figur 5 eine perspektivische Ansicht ist, die eine Vorrichtung darstellt, die den Einsatz einer zweiten Ausführungsvariante des Verfahrens zur Bewertung der Leistungen von Katalysatoren gemäß der Erfindung zeigt; und
- die Figuren 6, 6A und 7 schematische Ansichten sind, die zwei Funktionsvarianten der in Figur 5 dargestellten Vorrichtung zeigen.
   Die in den Figuren 1 bis 3 dargestellte Vorrichtung umfasst eine Vakuumkammer, die in ihrer Gesamtheit mit dem Bezugszeichen 2 bezeichnet ist. Diese Kammer ist mit einer Axialverrohrung 4 versehen, die mit Einrichtungen zur Untervakuumsetzung herkömmlichen Typs, die nicht dargestellt sind, zusammenwirken können.

Im Inneren der Kammer 2 ist ein Ventil 6 angeordnet, das mit einer Welle 8 versehen ist, die unter der Wirkung eines Motors 10 in Drehung versetzt werden kann. Dieses Ventil 6 entspricht einem von jenen, die von der Firma VALCO unter der Referenz SC vertrieben werden.

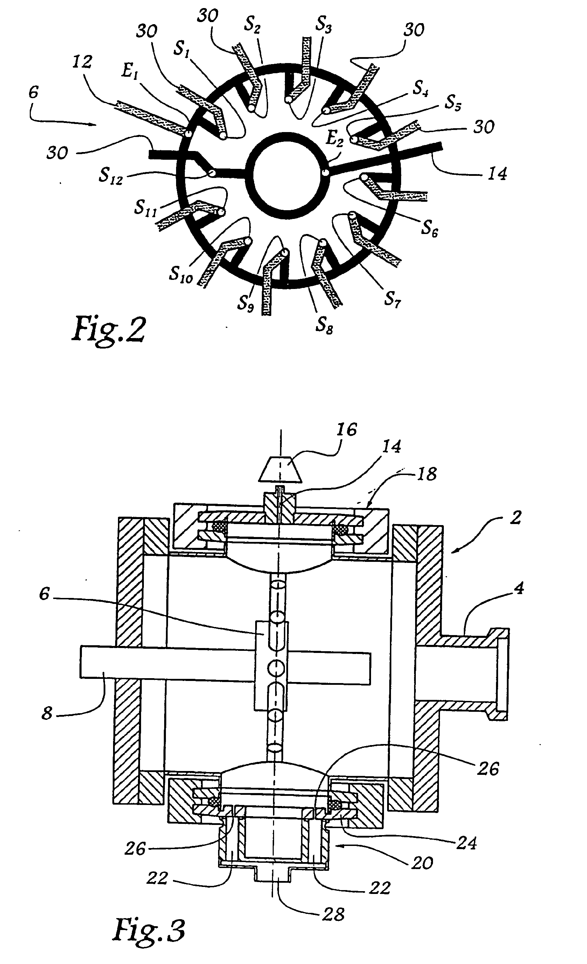

Wie Figur 2 zeigt, besitzt das Ventil 6 zwölf Öffnungen S1 bis S12, die Ausgänge oder Eingänge dieses Ventils bilden können. Überdies sind zwei zusätzliche Öffnungen E1 und E2 vorgesehen, die Eingänge bzw. Ausgänge bilden können. Im vorliegenden Beispiel bilden die Öffnungen S1 bis S12 Ausgänge, während die Öffnungen E1 und E2 Eingänge bilden.

In Abhängigkeit von der Position der Welle 8 steht der Eingang E2 mit einem einzigen der Ausgänge S1 bis S12 in Verbindung, im vorliegenden Fall mit dem Ausgang S12 in Figur 2. Der Eingang E1 hingegen wird mit allen anderen Ausgängen in Verbindung gebracht, nämlich mit den Ausgängen S1 bis S11 in dieser Figur 2.

Überdies bringt eine Leitung 12 den Eingang E1 mit einer nicht dargestellten Quelle in Verbindung, die die Speisung mit inertem Gas, das für die Vorbehandlung bestimmt ist, ermöglicht. Ferner bringt eine Leitung 14 den Eingang E2 mit einem Behälter 16 in Verbindung, der schematisch dargestellt ist und die Speisung mit Reaktivgas ermöglicht, wie dies im Folgenden beschrieben ist. Zu diesem Zweck durchquert die Speiseleitung 14 auf dichte Weise einen Deckel 18, der mit der Vakuumkammer 2 versehen ist.

Der Behälter 16 ist mit Ventilen hoher Geschwindigkeit versehen, die nicht dargestellt und in der Lage sind, Impulse von Reaktivgas zu erzeugen, deren Dauer ungefähr eine Millisekunde beträgt oder geringer als dieser Wert ist.

In dem beschriebenen und dargestellten Beispiel ermöglicht der Behälter 16 die Speisung mit nur einem Reaktivgas. Jedoch kann vorgesehen werden, aufeinander folgende Impulse zu erzeugen, die auf mindestens zwei unterschiedliche Reaktivgase zurückgreifen.

Die Kammer 2 nimmt auch in ihrem unteren Teil, der dem Behälter 16 gegenüberliegt, einen Reaktor auf, der in seiner Gesamtheit mit dem Bezugszeichen 20 bezeichnet ist. Letztgenannter ist ringförmig und umfasst zwölf Umfangskanäle 22, die Katalysatorproben aufnehmen können.

Zu diesem Zweck ist jeder Kanal an seinem unteren Teil durch einen nicht dargestellten Boden geschlossen, der die feste Phase dieses Katalysators zurückhalten kann und gleichzeitig das Reaktivgas frei abfließen lässt. Überdies ist ein ringförmiger Deckel 24 vorgesehen, der zwölf Öffnungen 26 aufweist, von denen jede mit einem entsprechenden Kanal 22 in Verbindung gebracht wird.

Die Ausgänge der verschiedenen Kanäle 22 sind derart verbunden, dass sie einen einzigen axialen Ausgang 28 bilden. Letztgenannter, welcher unter Vakuum gehalten wird, wird mit einem Analysegerät bekannten Typs in Verbindung gebracht, beispielsweise einem Massenspektrometer oder auch einem Gaschromalographen.

Jeder Kanal 22 wird mit dem Ventil 6 in Verbindung gebracht. Zu diesem Zweck erstrekken sich die zwölf Leitungen 30 zwischen einer der Öffnungen S1 bis S12 dieses Ventils und einer der Öffnungen 26, die in dem Deckel 24 vorgesehen sind.

Schließlich sind Heizeinrichtungen 32 für den Reaktor 20 vorgesehen. Diese Heizeinrichtungen, die ringförmig sind, sind am Umfang dieses Reaktors in der Nähe des oberen Teils dieses letztgenannten vorgesehen.

Der Einsatz der in den Figuren 1 bis 3 beschriebenen Vorrichtung wird nun erklärt.

Es geht zuerst darum, in elf der zwölf Kanäle 22 verschiedene Katalysatortypen anzuordnen. Der letzte Kanal dieses Reaktors ist nicht gefüllt oder nur mit einem inerten Material vom Typ Quarz, wodurch ein Bezug für die Analyse des Weges (Verteilung der Residenzzeiten) eines Impulses von Reaktivgas bei Fehlen einer Reaktion gebildet werden kann.

Es geht sodann darum, eine Vorbehandlung der elf Katalysatoren durchzuführen, die in dem Reaktor 20 angeordnet sind. Zu diesem Zweck wird der Eingang E2, der die Speisung mit Reaktivgas ermöglicht, mit dem Ausgang S12 in Verbindung gebracht, der mit dem nicht mit dem Katalysator gefüllten Kanal in Verbindung steht.

Unter diesen Bedingungen werden die elf anderen Öffnungen S1 bis S11 mit dem Eingang E1 in Verbindung gebracht. Dies ermöglicht es nun, ein Vorbehandlungsgas in diese verschiedenen Kanäle über den Eingang E1 und die elf Ausgänge S1 bis S11 einzuleiten.

Sodann, wenn diese Vorbehandlung beendet ist, wird die Welle 8 gedreht, um den Ausgang S1 mit dem Eingang E2 in Verbindung zu bringen. So befindet sich der Eingang E1 nun mit den Ausgängen S2 bis S12 in Verbindung.

Die Speisung mit Vorbehandlungsgas über die Leitung 12 und den Eingang E1 wird nun eingestellt. Hingegen wird ein Reaktivgasimpuls erzeugt, der vom Behälter 16 kommt und in einen ersten Kanal 22 des Reaktors 20 über den Eingang E2 und den Ausgang S1 geleitet wird. Dies ermöglicht es nun, über das Analysegerät auf bekannte Weise eine Kurve zu erhalten, die für den in dem betreffenden Kanal aufgenommenen Katalysator repräsentativ ist.

Nachdem der erste Katalysator getestet wurde, wird die Welle 8 weiter gedreht, um nun den Eingang E2 mit dem Ausgang S2 in Verbindung zu bringen. Auf diese Weise ist es nun möglich, einen weiteren Katalysator zu bewerten, der in dem zweiten von diesem Ausgang S2 gespeisten Kanal aufgenommen ist. Die Bewertung der elf Katalysatortypen erfolgt somit nacheinander.

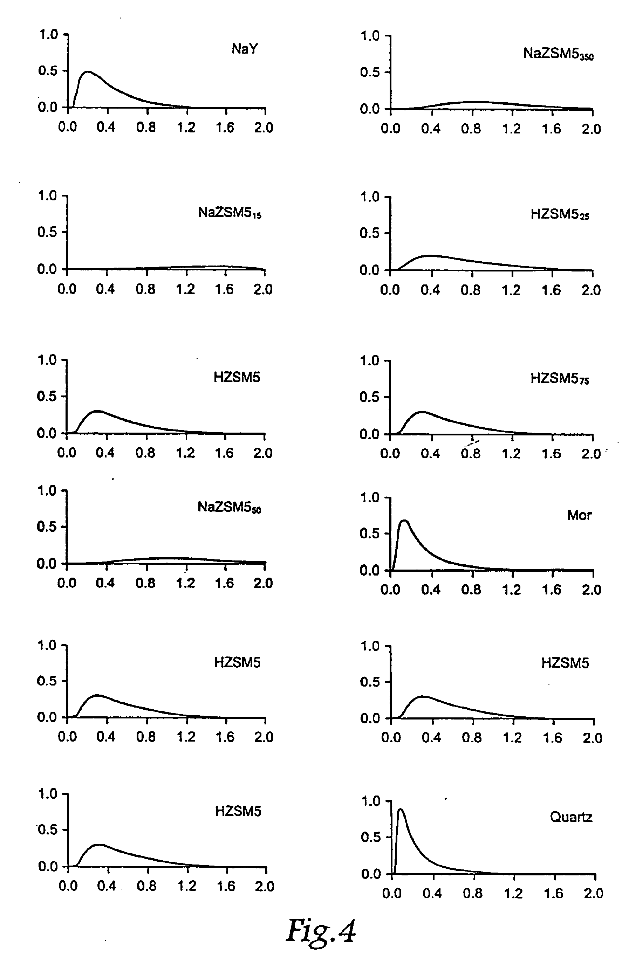

Ein genaues Einsatzbeispiel für die Vorrichtung der Figuren 1 bis 3 ist in Figur 4 dargestellt. In diesem Beispiel sind elf Katalysatoren zeolithischen Typs in entsprechenden Kanälen des Reaktors 20 angeordnet.

Eine dieser Proben ist zweimal vorgesehen, um die Reproduzierbarkeit der Messung zu gewährleisten. Überdies wurde der letzte Kanal mit Quarzteilchen gefüllt, um die Durchgangsdaten durch den Reaktor ohne Adsorption zu korrigieren.

Sodann wurde ein Gemisch aus 50 % Massenanteil Neon und 50 % Massenanteil Ethan zu diesen Proben geleitet. Die Dauer der entsprechenden Impulse beträgt einige Millisekunden.

Die Kurven der Figur 4 stellen die Antworten der verschiedenen Katalysatoren auf die Impulse des vorgenannten Gemisches bei 100 °C dar. Die Zeit ist in der Abszisse eingetragen, während in der Ordinate ein genormtes Abfließen eingetragen ist.

Diese Bewertungsmethode durch Zeitanalyse der Produkte ermöglicht es, die Unterschiede im Adsorptionsgrad der verschiedenen Katalysatorproben zu bewerten. So ermöglicht sie es, auf die Adsorptionsenthalpie dieser verschiedenen Katalysatoren durch Veränderung der Temperatur zuzugreifen.

Es ist anzumerken, dass die Zeolithen insbesondere als Katalysatoren für katalytisches Kracken verwendet werden, die es ermöglichen, schwere Ölfraktionen in leichtere Fraktionen, wie beispielsweise der Benzine, umzuwandeln. Auf diese Weise spielen die Adsorptionseigenschaften dieser Zeolithe eine wichtige Rolle für die Gesamtleistungen dieses Verfahrenstyps.

Die Bewertung durch eine transiente-kinetische Methode ist somit besonders gut für solche Katalysatoren geeignet. Zum Vergleich können diese Adsorptionseigenschaften nicht von im stationären Zustand durchgeführten Experimenten mit einem kontinuierlichen Reaktivgasfluss abgeleitet werden, da diese letztgenannten keinerlei Umwandlung erfahren.

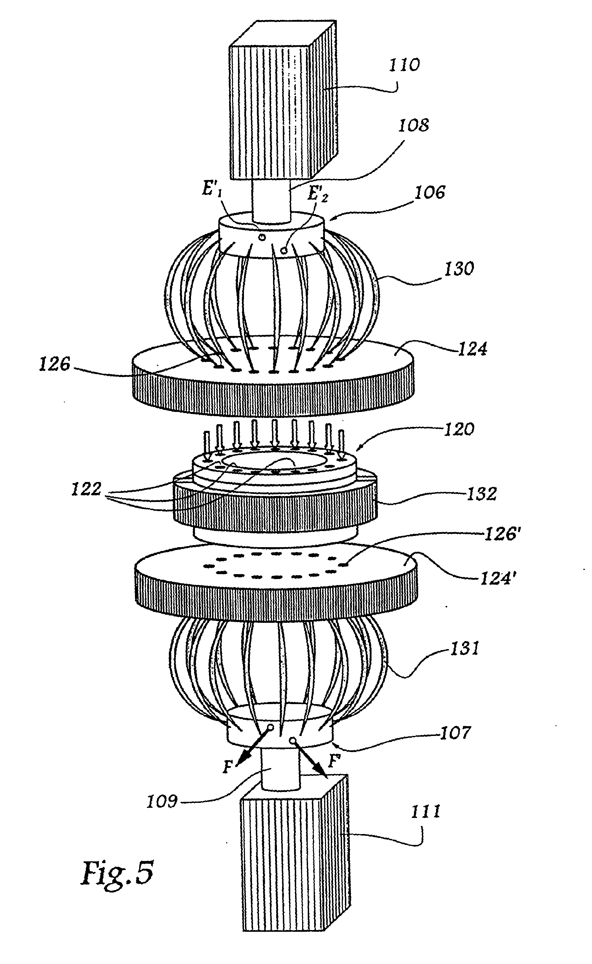

Figur 5 stellt eine Vorrichtung für den Einsatz einer Ausführungsvariante der Erfindung dar.

Diese Vorrichtung umfasst zuerst ein oberes Ventil 106, analog zu dem vorher beschriebenen 6. Dieses Ventil 106 unterscheidet sich von diesem allerdings darin, dass es sechzehn Öffnungen S'1 bis S'16 besitzt, die in dem vorliegenden Beispiel Ausgänge bilden. Überdies ist dieses Ventil 106 mit zwei Öffnungen E'1 und E'2 versehen, die Eingänge bilden. Es ist mit einer Welle 108 ausgestattet, die unter der Einwirkung eines Motors 110 in Drehung versetzt werden kann.

Die Vorrichtung umfasst auch einen ringförmigen Reaktor 120, in dem sechzehn Kanäle 122 eingearbeitet sind, die sich vertikal in dem beschriebenen Beispiel erstrecken. Dieser Reaktor 120 ist zwischen zwei zylindrischen Platten 124, 124' angeordnet, während nicht dargestellte Fixiereinrichtungen vorgesehen sind, die es ermöglichen, diesen Reaktor und diese beiden Platten gegenseitig festzuklemmen.

Der ringförmige Reaktor 120 ist von ringförmigen Heizeinrichtungen 132 umgeben, während jede Platte nicht dargestellte Kühlleitungen aufweist, die es ermöglichen, die Erscheinungen der Erhitzung zu verringern.

Sechzehn durchgehende Öffnungen 126, 126', die sich vertikal erstrecken, sind in jeder Platte 124, 124' vorgesehen. Es ist anzumerken, dass jede Öffnung 126, die in der oberen Platte 124 vorgesehen ist, in einen gegenüberliegenden Kanal 122 mündet, der sich selbst mit einer gegenüberliegenden Öffnung 126' in Verbindung befindet, die in der unteren Platte 124' vorgesehen ist.

Es ist auch ein unteres Ventil 107 analog zu dem oberen 106 vorgesehen. Allerdings werden in dem beschriebenen Beispiel die sechzehn Öffnungen E"1 bis E"16, mit denen dieses Ventil 107 versehen ist, als Eingänge verwendet, während die beiden Öffnungen S"1 und S"2 dieses selben Ventils als Ausgänge verwendet werden. Dieses Ventil 107 kann unter der Einwirkung einer Welle 109, die von einem Motor 111 angetrieben wird, in Drehung versetzt werden.

Sechzehn Leitungen 130 ermöglichen es, jeden Ausgang S'1 bis S'16 des Ventils 106 mit einer entsprechenden der Öffnungen 126, die in der oberen Platte vorgesehen sind, in Verbindung zu bringen. Sechzehn zusätzliche Leitungen 131 erstrecken sich zwischen einer der Öffnungen 126', die in der unteren Platte 124' vorgesehen sind, und einem entsprechenden der Eingänge E"1 bis E"16 dieses Ventils.

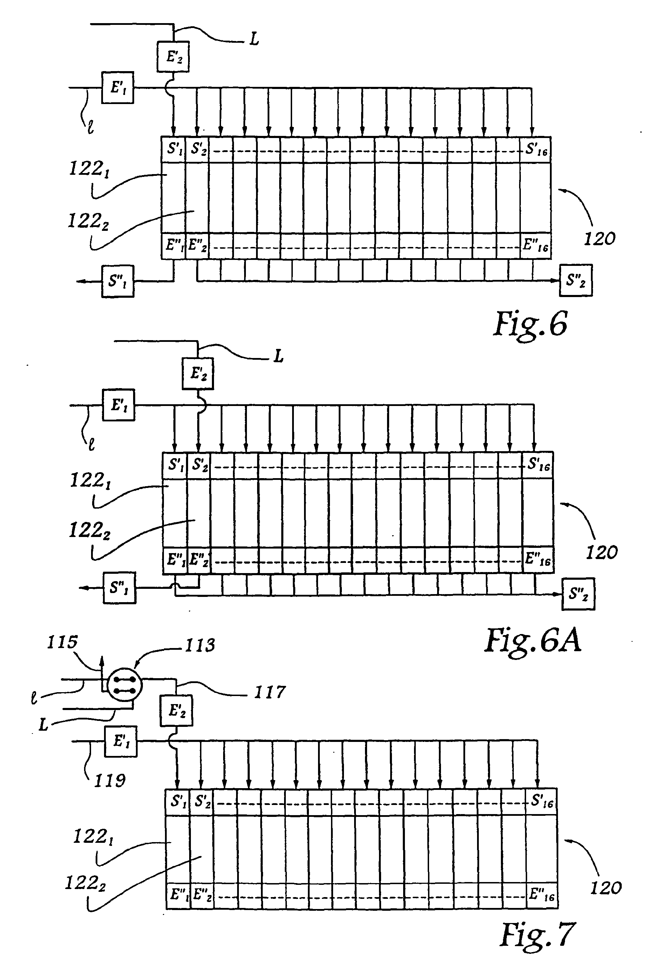

Eine erste Speisungsart mit Reaktivgas der Vorrichtung der Figur 5 wird nun unter Bezugnahme auf die Figuren 6 und 6A beschrieben.

Zuerst ist zu erwähnen, dass gemäß dem für das Ventil 6 Gesagten der Eingang E'2 des Ventils 106 mit nur einem der Ausgänge S'1 bis S'16 in Verbindung steht, während der Eingang E'1 mit allen anderen Ausgängen in Verbindung steht.

Überdies wird der Eingang E'1 über eine Leitung I mit einem ersten Reaktivgas gespeist, das beispielsweise Stickstoffmonoxid N¹⁴O¹⁶ sein kann. Der Eingang E'2 wird über eine Leitung L mit einem anderen Reaktivgas gespeist, das ein Isotop des ersten darstellt, beispielsweise Stickstoffmonoxid in seiner isotopen Form N¹⁵O¹⁸.

Der Ausgang S"1 des unteren Ventils 107 wird gemäß dem Pfeil F mit einem nicht dargestellten Analysegerät in Verbindung gebracht, welches beispielsweise ein Massenspektrometer oder ein Gaschromatograph ist. Der andere Ausgang S"2 dieses Ventils 107 gewährleistet seinerseits eine Funktion des Ausstoßens der Reaktivgase in Richtung Atmosphäre, dargestellt durch den Pfeil F'.

Es ist anzumerken, dass jeder Ausgang S'1 bis S'16 des oberen Ventils 106 über die Leitungen 130 und 131, die Öffnungen 126 und 126' sowie die Kanäle 122 mit einem entsprechenden Eingang E"1 bis E"16 des unteren Ventils 107 in Verbindung gebracht wird.

Es wird angenommen, dass sich der Eingang E'2 zu einem gegebenen Zeitpunkt (Figur 6) mit dem Ausgang S'1 in Verbindung befindet. So nimmt der erste Kanal 122₁ des Reaktors 120, der von diesem Ausgang S'1 gespeist wird, das isotope Reaktivgas auf, während die anderen Kanäle mit dem ersten Reaktivgas gespeist werden.

Überdies wird dieses isotope Reaktivgas, das durch den Ausgang S'1 fließt, durch den Eingang E"1 eingeleitet und zu dem Analysegerät über den Ausgang S"1 geleitet. Die nicht isotopen Reaktivgase ihrerseits werden über die Eingänge E"2 bis E"16 sowie den Ausgang S"2 in die Atmosphäre geleitet.

Falls ein Impuls in dem zweiten Kanal 122₂, der von dem Ausgang S'2 gespeist wird, erzeugt werden soll, wird das Ventil 106 mit Hilfe der Welle 108 gedreht, so dass sich der Eingang E'2 nun mit diesem Ausgang S'2 in Verbindung befindet (Figur 6A). In diesem Fall nehmen die anderen Ausgänge S'1 und S'3 bis S'16 sowie die Kanäle, die sie speisen, das erste nicht isotope Reaktivgas auf.

Überdies geht es darum, das untere Ventil 107 gleichzeitig mit dem oberen Ventil 106 und in umgekehrte Drehrichtung zu drehen.

Auf diese Weise steht der Eingang E"2 dieses Ventils 107, das mit dem zweiten Kanal 122₂ verbunden ist, mit dem Ausgang S"1 und somit dem Analysegerät in Verbindung.
Die anderen Eingänge E"1 und E"3 bis E"16 stehen nun mit dem Ausgang S"2 in Verbindung, so dass das nicht isotope Reaktivgas, das in diese Eingänge eingeleitet wird, in die Atmosphäre abgegeben wird.

Figur 7 stellt eine weitere Speisungsart mit Reaktivgasen der Vorrichtung der Figur 5 dar.

Wie diese Figur 7 zeigt, münden die Leitung I zur Speisung mit nicht isotopem Reaktivgas sowie die Leitung L zur Speisung mit isotopem Reaktivgas in zwei Eingänge eines Vierwegeventils 113 bekannten Typs. Ein erster Ausgang dieses Ventils 113 ermöglicht den Ausstoß in die Atmosphäre über eine Leitung 115, während sein anderer Ausgang mit dem Eingang E'2 des oberen Ventils 106 über eine Leitung 117 in Verbindung gebracht wird.

In Figur 7 bringt das Vierwegeventil 113 die Leitung I mit der Leitung 117 in Verbindung, so dass der Eingang E'1 mit nicht isotopem Reaktivgas gespeist wird. Dasselbe gilt für den Ausgang S'1 sowie für den in dem ersten Kanal 122₁ des Reaktors 120 aufgenommenen Katalysator.

Überdies wird eine zusätzliche Leitung 119, die inertes Gas transportiert, mit dem Eingang E'1 des Ventils 106 und somit den Ausgängen S'2 bis S'16 dieses letztgenannten in Verbindung gebracht. Auf diese Weise werden die in den anderen Kanälen des Reaktors aufgenommenen Katalysatorproben mit einem solchen inerten Gas gespeist, das beispielsweise Helium oder Argon ist.

Falls ein Impuls auf Höhe des in dem ersten Kanal 122₁ aufgenommenen Katalysators erzeugt werden soll, muss das Vierwegeventil 113 gekippt werden, um die Leitung 117 mit der Leitung L in Verbindung zu bringen, die die Speisung mit isotopem Reaktivgas gewährleistet. Auf diese Weise wird das nicht isotope Reaktivgas, das ursprünglich zu dem Katalysator geleitet wurde, durch die Leitung 115 in die Atmosphäre abgegeben.

Falls der zweite Katalysator getestet werden soll, der in dem zweiten Kanal 122₂ aufgenommen wurde, muss das obere Ventil 106 gekippt werden, um den Ausgang S'2 mit dem Eingang E'2 in Verbindung zu bringen, wobei das Vierwegeventil 113 in seiner Position der Figur 7 gehalten wird. Dieser zweite Kanal, der ursprünglich mit inertem Gas gespeist wurde, empfängt somit nun nicht isotopes Reaktivgas, während die anderen Kanäle mit inertem Gas gespeist werden.

Sodann wird das Vierwegeventil gekippt, wie vorher beschrieben, um die Leitung 117 mit isotopem Reaktivgas zu speisen. Unter diesen Bedingungen befindet sich der in dem zweiten Kanal 122₂ vorhandene Katalysator nun mit dem isotopen Reaktivgas in Kontakt, wodurch es möglich ist, ihn einer Störung zu unterziehen.

In den Figuren 5 bis 7 wurde ein Beispiel zur Bewertung von Katalysatoren beschrieben, die auf eine transienten-kinetische Methode isotopen Typs (SSITKA) zurückgreift. Als Variante können auch stufenweise transiente Methoden angewandt werden. In diesem Zusammenhang transportieren die Speiseleitungen L und I Reaktivgase, deren Zusammensetzungen völlig unterschiedlich sind und die somit keine einfachen isotopen Varianten darstellen.

Die Erfindung ermöglicht es, die vorher erwähnten Ziele zu verwirklichen. Die Erfindung ermöglicht es nämlich, die Anzahl von Katalysatorproben, die in einer gegebenen Zeit getestet werden können, zu erhöhen, wobei die Wirksamkeit der Bewertungsmethoden transienten Typs genutzt werden.

So garantiert sie ein besseres Verständnis, was die durch die Änderungen der Zusammensetzung und der Struktur der Katalysatoren hervorgerufenen Auswirkungen auf die verschiedenen elementaren Schritte einer gegebenen Reaktion betrifft.

Auf diese Weise ist die Erfindung in der Lage, eine zufrieden stellende Ergänzung zu den bekannten kombinatorischen Techniken zu bieten, die die Entdeckung neuer Katalysatoren oder die Optimierung von bestehenden Katalysatoren zum Ziel haben, indem Beziehungen zwischen Informationen über die Zusammensetzung und Struktur der Katalysatoren und die globalen Parameter der katalytischen Reaktion, wie beispielsweise die Selektivität, der Umsatz, die Ausbeute, den Mechanismus und die internen kinetischen Parameter der Reaktion, wie beispielsweise interne Geschwindigkeitskonstanten (Drehzahl der aktiven Bereiche, Aktivierungsenergie ...), hergestellt werden.

## Patentansprüche

1. Verfahren zur Bewertung der Merkmale von Katalysatoren, bei dem verschiedene Katalysatorproben nach transienten-kinetischen Methoden getestet werden, **dadurch gekennzeichnet, dass** das Verfahren die Schritte umfasst:
paralleles Anordnen der Katalysatorproben in einer Einrichtung zur Aufnahme (20; 120) mehrerer Katalysatorproben; und
nacheinander durchgeführtes Testen dieser verschiedenen Proben nach transienten-kinetischen Methoden, indem ein Störfluss von mindestens einem Reaktivgas zu jeder getesteten Probe geleitet wird (14, 30; I, L, 130), wobei der Störfluss derart geleitet wird, dass zu jeder unter Vakuum gestellten Katalysatorprobe mindestens ein Impuls von mindestens einem Reaktivgas gesandt wird (14, 30), dass die Katalysatorproben einzeln mittels Mitteln zur Einzelspeisung (14) gespeist werden, die auf selektive Weise mit Verteilungseinrichtungen (30) verbunden sind, die in die Einrichtungen zur Aufnahme mehrere Katalysatorproben (20) münden.

2. Verfahren nach Anspruch 1, **dadurch gekennzeichnet, dass** der Impuls eine Dauer von weniger als 10 ms, vorzugsweise von weniger als 1 ms, besitzt und jede Probe unter einem Druck von weniger als 10 mbar, vorzugsweise weniger als 1 mbar, angeordnet ist.

3. Verfahren nach Anspruch 1 oder 2, **dadurch gekennzeichnet, dass** alle getesteten Proben gleichzeitig einer einzigen Vorbehandlungsphase (12) unterzogen werden.

4. Verfahren nach einem der Ansprüche 1 bis 3, **dadurch gekennzeichnet, dass**, wenn der oder jeder Impuls zu einer gegebenen Katalysatorprobe geleitet wird, die anderen Katalysatorproben in Ruhe belassen werden.

5. Verfahren nach einem der Ansprüche 1 bis 4, **dadurch gekennzeichnet, dass**, nachdem jedes Reaktivgas zu jeder Katalysatorprobe geflossen ist, diese(s) Reaktivgas(e) zu einem einzigen Analysegerät geleitet werden.

6. Verfahren nach Anspruch 1, **dadurch gekennzeichnet, dass** zu einer gegebenen Katalysatorprobe zuerst ein erstes Reaktivgas (I) und sodann ein zweites Ersatzreaktivgas (L) bei einem Druck größer oder gleich dem Luftdruck geleitet werden.

7. Verfahren nach Anspruch 6, **dadurch gekennzeichnet, dass** das zweite Gas ein Isotop des ersten Gases ist.

8. Verfahren nach Anspruch 6, **dadurch gekennzeichnet, dass** das zweite Gas eine andere Reaktivität als das erste Gas besitzt.

9. Verfahren nach einem der Ansprüche 6 bis 8, **dadurch gekennzeichnet, dass**, wenn eine gegebene Katalysatorprobe mit dem ersten Reaktivgas oder dem zwei-ten Reaktivgas gespeist wird, die anderen Katalysatorproben mit Hilfe des zweiten Reaktivgases bzw. des ersten Reaktivgases gespeist werden.

10. Verfahren nach einem der Ansprüche 6 bis 8, **dadurch gekennzeichnet, dass**, wenn eine gegebene Katalysatorprobe mit dem ersten Reaktivgas oder dem zwei-ten Reaktivgas gespeist wird, die anderen Katalysatorproben mit einem inerten Gas gespeist werden.

11. Vorrichtung zur Bewertung der Merkmale von Katalysatoren für den Einsatz des Verfahrens, umfassend Einrichtungen zur Aufnahme (20; 120) mehrerer Katalysatorproben, die parallel angeordnet sind, **dadurch gekennzeichnet, dass** die Vorrichtung Einrichtungen (6, 14, 16; 106, I, L) umfasst, die es ermöglichen, einen Störfluss zu jeder Katalysatorprobe zu leiten, um diese nacheinander nach transienten-kinetischen Methoden zu testen, **dadurch gekennzeichnet, dass** die Aufnahmeein-richtungen (20) unter Vakuum angeordnet sind und die Einrichtungen, die es ermöglichen, den Störfluss zu leiten, Einrichtungen(16) zur Erzeugung von mindestens einem Impuls mindestens eines Reaktivgases umfassen, wobei die Einrichtungen zur Erzeugung eines Impulses mit Einrichtungen zur Einzelspeisung (14) verbunden sind, die auf selektive Weise mit Verteilungseinrichtungen (30) verbunden sind, die in die Aufnahmeeinrichtungen (20) münden.

12. Vorrichtung nach Anspruch 11, **dadurch gekennzeichnet, dass** die Einrichtungen zur Einzelspeisung (14) in den Versorgungseingang (E2) eines Speiseventils (6) münden, wobei dieses Ventil ferner mehrere Ausgänge (S1-S12) umfasst, die sich jeweils mit einer entsprechenden Verteilungseinrichtung (30) in Verbindung befinden, wobei jeder Ausgang selektiv mit dem Versorgungseingang (E2) verbunden sein kann.

13. Vorrichtung nach Anspruch 12, **dadurch gekennzeichnet, dass** das Speiseventil (6) ferner einen Vorbehandlungseingang (E1) umfasst, der mit allen Ausgängen des Ventils verbunden werden kann, mit Ausnahme des Ausgangs, der mit dem Versorgungseingang in Verbindung steht.

14. Vorrichtung nach einem der Ansprüche 11 bis 13, **dadurch gekennzeichnet, dass** die Aufnahmeeinrichtungen unter Vakuum einen ringförmigen Reaktor (20) umfassen, der mehrere Aufnahmelagerungen (22) für eine entsprechende Katalysatorprobe aufweist.

15. Vorrichtung nach einem der Ansprüche 11 bis 14, **dadurch gekennzeichnet, dass** die Aufnahmeeinrichtungen unter Vakuum (20) einen einzigen Ausgang (28) besitzen, der mit einem Analysegerät verbunden werden kann.

16. Vorrichtung nach Anspruch 11, **dadurch gekennzeichnet, dass** die Aufnahmeeinrichtungen (120) unter einem Druck größer oder gleich dem Luftdruck angeordnet sind, während die Einrichtungen (I, L, 106), die das Leiten des Störflusses ermöglichen, Einrichtungen (I) zur Speisung mit einem ersten Reaktivgas, Einrichtungen (L) zur Speisung mit einem zweiten Reaktivgas sowie Einrichtungen (106) umfassen, die es ermöglichen, das erste oder das zweite Reaktivgas durch das andere dieser Reaktivgase zu ersetzen.

17. Vorrichtung nach Anspruch 16, **dadurch gekennzeichnet, dass** die Einrichtungen (I) zur Speisung mit einem ersten Reaktivgas in einen ersten Eingang (E'1) eines Speiseventils (106) münden, während die Einrichtungen (L) zur Speisung mit einem zweiten Reaktivgas in einen zweiten Eingang (E'2) dieses Ventils münden,
wobei dieser zweite Eingang selektiv mit einem gegebenen Ausgang (S'2) verbunden ist, der mit einer Lagerung (122₂) in Verbindung steht, die zu den Aufnahmeeinrichtungen (120) gehört und in der Lage ist, eine gegebene Katalysatorprobe aufzunehmen, während der erste Eingang (E'1) mit allen anderen Ausgängen (S'1, S'3-S'16) des Ventils verbunden ist, die mit den anderen Lagerungen (122₁, 122₃-122₁₆) der Aufnahmeeinrichtungen in Verbindung stehen.

18. Vorrichtung nach Anspruch 16, **dadurch gekennzeichnet, dass** die Einrichtungen (I) zur Speisung mit einem ersten Reaktivgas in einen ersten Eingang eines Vierwegeventils (113) münden, während die Einrichtungen (L) zur Speisung mit einem zweiten Reaktivgas in einen zweiten Eingang dieses Vierwegeventils (113) münden, wobei dieses Ventil ferner einen Ablassausgang (115) sowie einen Versorgungsausgang (117) besitzt, der selektiv mit einer gegebenen Lagerung (122₁) der Aufnahmeeinrichtungen (120) verbunden ist.

19. Vorrichtung nach Anspruch 18, **dadurch gekennzeichnet, dass** die Einrichtungen (119) zur Speisung mit einem inerten Gas in einen ersten Eingang (E'1) eines Speiseventils (106) münden, während der Versorgungsausgang (117) in einen zweiten Eingang (E'2) dieses Ventils mündet, wobei dieser zweite Eingang selektiv mit einem gegebenen Ausgang (S'1) verbunden ist, der mit einer Lagerung (122₁) in Verbindung steht, die zu den Aufnahmeeinrichtungen (120) gehört und in der Lage ist, eine gegebene Katalysatorprobe aufzunehmen, während der erste Eingang (E'1) mit allen anderen Ausgängen (S'2-S'16) des Ventils verbunden ist, die mit den anderen Lagerungen (122₂ - 122₁₆) der Aufnahmeeinrichtungen in Verbindung stehen.

20. Vorrichtung nach einem der Ansprüche 16 bis 19, **dadurch gekennzeichnet, dass** der Ausgang der Aufnahmeeinrichtungen (120) mit einem Ablassventil (107) verbunden ist, das selektiv mit einem Analysegerät in Verbindung steht.

21. Vorrichtung nach Anspruch 20, **dadurch gekennzeichnet, dass** das Ablassventil einen Analyseausgang (S"1) besitzt, der mit einem Analysegerät in Verbindung steht, wobei dieser Analyseausgang selektiv mit einem gegebenen Eingang (E"2) dieses Ventils verbunden sein kann, sowie einen Ablassausgang (S"2), der mit den anderen Eingängen (E"1, E"3-E"16) in Verbindung steht.

## Claims

1. A method for assessing the characteristics of catalysts, wherein various catalyst samples are tested according to transient-kinetic techniques, **characterized in that** the method comprises the steps of
- arranging in parallel the catalyst samples in a means (20; 120) for receiving a plurality of catalyst samples; and
- consecutively performed testing of these various samples according to transient-kinetic techniques wherein a perturbation stream of at least one reactive gas is passed to each sample to be tested (14, 30; I, L, 130),
said perturbation stream being conducted in such a way that at least one pulse of at least one reactive gas is directed to each catalyst sample under vacuum (14, 30), that the catalyst samples are supplied individually using single-feed means (14) selectively connected with distribution means (30) leading into the means for receiving a plurality of catalyst samples (20).

2. The method according to claim 1, **characterized in that** the pulse has a duration of less than 10 ms, preferably less than 1 ms, and that each sample is arranged under a pressure of less than 10 mbar, preferably less than 1 mbar.

3. The method according to claim 1 or 2, **characterized in that** all samples to be tested are simultaneously subjected to a single pretreatment phase (12).

4. The method according to any of claims 1 to 3, **characterized in that** if one or each pulse is directed to a given catalyst sample, the other catalyst samples are allowed to rest.

5. The method according to any of claims 1 to 4, **characterized in that** after each reactive gas has flown to each catalyst sample, the reactive gas(es) is/are directed to a single analytic instrument.

6. The method according to claim 1, **characterized in that** to a given catalyst sample a first reactive gas (I) is initially supplied and subsequently a second, substitute reactive gas (L) is supplied at a pressure greater than or equal to atmospheric pressure.

7. The method according to claim 6, **characterized in that** the second gas is an isotope of the first gas.

8. The method according to claim 6, **characterized in that** the second gas has a reactivity different from that of the first gas.

9. The method according to any of claims 6 to 8, **characterized in that** if a given catalyst sample is fed with the first reactive gas or the second reactive gas, the other catalyst samples are fed using the second reactive gas and the first reactive gas, respectively.

10. The method according to any of claims 6 to 8, **characterized in that** if a given catalyst sample is fed with the first reactive gas or the second reactive gas, the other catalyst samples are fed with an inert gas.

11. A device for assessing the characteristics of catalysts for use in said method, comprising means (20; 120) for receiving a plurality of catalyst samples arranged in parallel, **characterized in that** the device comprises means (6, 14, 16; 106, I, L) allowing to pass a perturbation stream to each catalyst sample in order to effect consecutive testing thereof according to transient-kinetic techniques, **characterized in that** the reception means (20) are arranged under vacuum and the means allowing to conduct the interfering stream comprise means (16) for generating at least one pulse of least one reactive gas, said means for generating a pulse being connected with single-feed means (14) selectively connected with distribution means (30) leading into the receiving means (20).

12. The device according to claim 11, **characterized in that** the single-feed means (14) lead to the supply inlet (E2) of a feed valve (6), said valve further comprising a plurality of outlets (S1-S12), each of which is in connection with a corresponding distribution means (30), wherein each outlet being can selectively be connected with the supply inlet (E2).

13. The device according to claim 12, **characterized in that** the feed valve (6) further comprises a pretreatment inlet (E1) which can be connected with all outlets of the valve, with the exception of the outlet that is connected with the supply inlet.

14. The device according to any of claims 11 to 13, **characterized in that** the receiving means under vacuum comprise an annular reactor (20) which has a plurality of receiving reservoirs (22) for a corresponding catalyst sample.

15. The device according to any of claims 11 to 14, **characterized in that** the receiving means under vacuum (20) have a single outlet (28) which can be connected to an analytic instrument.

16. The device according to claim 11, **characterized in that** the receiving means (120) are arranged under a pressure greater than or equal to atmospheric pressure, while the means (I, L, 106), allowing to conduct the perturbation stream comprise means (I) for feeding a first reactive gas, means (L) for feeding a second reactive gas, as well as means (106) allowing to replace the first or second reactive gas with another of these reactive gases.

17. The device according to claim 16, **characterized in that** the means (I) for feeding a first reactive gas lead to a first inlet (E'1) of a feed valve (106), while the means (L) for feeding a second reactive gas lead to a second inlet (E'2) of said valve, said second inlet being selectively connected with a given outlet (S'2) connected to a reservoir (122₂) which is included in the receiving means (120) and capable of receiving a given catalyst sample, while the first inlet (E'1) is connected with all other outlets (S'1, S'3-S'16) of the valve, which are connected with the other reservoirs (122₁, 122₃-122₁₆) of the reception means.

18. The device according to claim 16, **characterized in that** the means (I) for feeding a first reactive gas lead to a first inlet of a four-way valve (113), while the means (L) for feeding a second reactive gas lead to a second inlet of the four-way valve (113), said valve further having a discharge outlet (115) and a supply outlet (117) which is selectively connected with a given reservoir (122₁) of the receiving means (120).

19. The device according to claim 18, **characterized in that** the means (119) for feeding an inert gas lead to a first inlet (E'1) of a feed valve (106), while the supply outlet (117) leads to a second inlet (E'2) of said valve, the second inlet being selectively connected with a given outlet (S'1) connected to a reservoir (122₁) which is included in the receiving means (120) and capable of receiving a given catalyst sample, while the first inlet (E'1) is connected with all other outlets (S'2-S'16) of the valve, which are connected with the other reservoirs (122₂-122₁₆) of the reception means.

20. The device according to any of claims 16 to 19, **characterized in that** the outlet of the receiving means (120) is connected with a discharge valve (107) selectively connected to an analytic instrument.

21. The device according to claim 20, **characterized in that** the discharge valve has an outlet for analysis (S"1) connected to an analytic instrument, which outlet for analysis can be selectively connected with a given inlet (E"2) of said valve, as well as a discharge outlet (S"2) connected with the other inlets (E"1, E"3-E"16).

## Revendications

1. Procédé pour l'évaluation des caractéristiques de catalyseurs, dans le cadre duquel différents échantillons de catalyseur sont testés selon des méthodes cinétiques transitoires, **caractérisé en ce que** le procédé comporte les étapes consistant à :
agencer parallèlement les échantillons de catalyseur dans un dispositif de réception (20 ; 120) de plusieurs échantillons de catalyseur ; et
tester ces différents échantillons les uns après les autres selon des méthodes cinétiques transitoires, en conduisant un flux parasite d'au moins un gaz réactif à chaque échantillon testé (14, 30 ; 1, L, 130), le flux parasite étant conduit de telle sorte qu'au moins une impulsion d'au moins un gaz réactif est envoyée (14, 30) à chaque échantillon de catalyseur placé sous vide, que les échantillons de catalyseur sont alimentés un à un à l'aide de moyens d'alimentation individuelle (14) qui sont reliés de manière sélective à des dispositifs de distribution (30) qui débouchent dans les dispositifs de réception de plusieurs échantillons de catalyseur (20).

2. Procédé selon la revendication 1, **caractérisé en ce que** l'impulsion a une durée inférieure à 10 ms, de préférence inférieure à 1 ms, et chaque échantillon est placé sous une pression inférieure à 10 mbar, de préférence inférieure à 1 mbar.

3. Procédé selon la revendication 1 ou 2, **caractérisé en ce que** tous les échantillons testés sont soumis en même temps à une seule phase de conditionnement (12).

4. Procédé selon l'une quelconque des revendications 1 à 3,
**caractérisé en ce que**, lorsque la ou chaque impulsion est conduite à un échantillon de catalyseur donné, les autres échantillons de catalyseur sont laissés en paix.

5. Procédé selon l'une quelconque des revendications 1 à 4,
**caractérisé en ce que**, après écoulement de chaque gaz réactif vers chaque échantillon de catalyseur, ce(s) gaz réactif(s) sont conduits à un seul appareil d'analyse.

6. Procédé selon la revendication 1, **caractérisé en ce que** d'abord un premier gaz réactif (1) et ensuite un deuxième gaz réactif de remplacement (L) sont conduits à une pression supérieure ou égale à la pression atmosphérique à un échantillon de catalyseur donné.

7. Procédé selon la revendication 6, **caractérisé en ce que** le deuxième gaz est un isotope du premier gaz.

8. Procédé selon la revendication 6, **caractérisé en ce que** le deuxième gaz a une autre réactivité que le premier gaz.

9. Procédé selon l'une quelconque des revendications 6 à 8,
**caractérisé en ce que**, lorsqu'un échantillon de catalyseur donné est alimenté en premier gaz réactif ou en deuxième gaz réactif, les autres échantillons de catalyseur sont alimentés à l'aide du deuxième gaz réactif respectivement du premier gaz réactif.

10. Procédé selon l'une quelconque des revendications 6 à 8,
**caractérisé en ce que** lorsqu'un échantillon de catalyseur donné est alimenté en premier gaz réactif ou en deuxième gaz réactif, les autres échantillons de catalyseur sont alimentés en gaz inerte.

11. Dispositif pour l'évaluation des caractéristiques de catalyseurs destiné à la mise en oeuvre du procédé, comprenant des dispositifs de réception (20 ; 120) de plusieurs échantillons de catalyseur, qui sont agencés en parallèle,
**caractérisé en ce que** le dispositif comprend des dispositifs (6, 14, 16 ; 106, 1, L) qui permettent de conduire un flux parasite à chaque échantillon de catalyseur pour les tester les uns après les autres selon des méthodes cinétiques transitoires,
**caractérisé en ce que** les dispositifs de réception (20) sont agencés sous vide et les dispositifs, qui permettent de conduire le flux parasite, comprennent des dispositifs (16) de génération d'au moins une impulsion d'au moins un gaz réactif, les dispositifs de génération d'une impulsion étant reliés à des dispositifs d'alimentation individuelle (14) qui sont reliés de manière sélective à des dispositifs de distribution (30) qui débouchent dans les dispositifs de réception (20).

12. Dispositif selon la revendication 11, **caractérisé en ce que** les dispositifs d'alimentation individuelle (14) débouchent dans l'entrée d'alimentation (E2) d'une soupape d'alimentation (6), cette soupape comprenant en outre plusieurs sorties (S1 - S12) qui communiquent respectivement avec un dispositif de distribution (30) correspondant, chaque sortie étant reliée de manière sélective à une entrée d'alimentation (E2).

13. Dispositif selon la revendication 12, **caractérisé en ce que** la soupape d'alimentation (6) comprend en outre une entrée de conditionnement (E1) qui peut être reliée à toutes les sorties de la soupape, à l'exception de la sortie qui communique avec l'entrée d'alimentation.

14. Dispositif selon l'une quelconque des revendications 11 à 13, **caractérisé en ce que** les dispositifs de réception sous vide comprennent un réacteur annulaire (20) qui présente plusieurs logements de réception (22) pour un échantillon de catalyseur correspondant.

15. Dispositif selon l'une quelconque des revendications 11 à 14, **caractérisé en ce que** les dispositifs de réception sous vide (20) disposent d'une seule sortie (28) qui peut être reliée à un appareil d'analyse.

16. Dispositif selon la revendication 11, **caractérisé en ce que** les dispositifs de réception (120) sont agencés sous une pression supérieure ou égale à la pression atmosphérique, alors que les dispositifs (1, L, 106), qui permettent la conduite du flux parasite, comprennent des dispositifs (1) d'alimentation en premier gaz réactif, des dispositifs (L) d'alimentation en deuxième gaz réactif ainsi que des dispositifs (106), qui permettent de remplacer le premier ou le deuxième gaz réactif par l'autre de ces gaz réactifs.

17. Dispositif selon la revendication 16, **caractérisé en ce que** les dispositifs (1) d'alimentation en premier gaz réactif débouchent dans une première entrée (E'1) d'une soupape d'alimentation (106) tandis que les dispositifs (L) d'alimentation en deuxième gaz réactif débouchent dans une deuxième entrée (E'2) de cette soupape, cette deuxième entrée étant reliée de manière sélective à une sortie donnée (S'2), qui communique avec un logement (122₂), qui fait partie des dispositifs de réception (120) et est en mesure de recevoir un échantillon de catalyseur donné, tandis que la première entrée (E'1) est reliée à toutes les autres sorties (S'1, S'3 - S'16) de la soupape, qui communiquent avec les autres logements (122₁, 122₃ - 122₁₆) des dispositifs de réception.

18. Dispositif selon la revendication 16, **caractérisé en ce que** les dispositifs (1) d'alimentation en premier gaz réactif débouchent dans une première entrée d'un distributeur à quatre voies (113), alors que les dispositifs (L) d'alimentation en deuxième gaz réactif débouchent dans une deuxième entrée de ce distributeur à quatre voies (113), ce distributeur disposant en outre d'une sortie de décharge (115) ainsi que d'une sortie d'alimentation (117), qui est reliée de manière sélective à un logement (122₁) donné des dispositifs de réception (120).

19. Dispositif selon la revendication 18, **caractérisé en ce que** les dispositifs (119) d'alimentation en gaz inerte débouchent dans une première entrée (E'1) d'une soupape d'alimentation (106) tandis que la sortie d'alimentation (117) débouche dans une deuxième entrée (E'2) de cette soupape, cette deuxième entrée étant reliée de manière sélective à une sortie donnée (S'1) qui communique avec un logement (122₁) qui fait partie des dispositifs de réception (120) et est en mesure de recevoir un échantillon de catalyseur donné, tandis que la première entrée (E'1) est reliée à toutes les autres sorties (S'2 - S'16) de la soupape qui communiquent avec les autres logements (122₂ - 122₁₆) des dispositifs de réception.

20. Dispositif selon l'une quelconque des revendications 16 à 19, **caractérisé en ce que** la sortie des dispositifs de réception (120) est reliée à une soupape de décharge (107) qui communique de manière sélective avec un appareil d'analyse.

21. Dispositif selon la revendication 20, **caractérisé en ce que** la soupape de décharge possède une sortie d'analyse (S" 1) qui communique avec un appareil d'analyse, cette sortie d'analyse pouvant être reliée de manière sélective à une entrée (E''2) donnée de cette soupape, ainsi qu'une sortie de décharge (S''2) qui communique avec les autres entrées (E''1, E" 3 - E''16).
